# EUROPEAN PATENT SPECIFICATION

(11) **EP 2 089 326 B1**
(45) Date of publication and mention of the grant of the patent: **26.03.2014**
(21) Application number: 07815725.2
(22) Date of filing: 23.10.2007
(51) Int. Cl.: C02F 1/467, C02F 103/08

(54) **TREATMENT SYSTEM OF SHIPS BALLAST WATER, OFFSHORE PETROLEUM PLATFORMS AND VESSELS, IN GENERAL, THROUGH A PROCESS IN AN ELECTROCHEMICAL REACTOR**
BEHANDLUNGSSYSTEM FÜR SCHIFFSBALLASTWASSER, OFFSHORE-ERDÖLPLATTFORMEN UND BEHÄLTER IM ALLGEMEINEN DURCH EIN VERFAHREN IN EINEM ELEKTROCHEMISCHEN REAKTOR
SYSTÈME DE TRAITEMENT DE L'EAU DE BALLAST DES NAVIRES, DES PLATES-FORMES PÉTROLIÈRES EN MER ET DE CONTENANTS, EN GÉNÉRAL, À L'AIDE D'UN PROCÉDÉ DANS UN RÉACTEUR ÉLECTROCHIMIQUE

(30) Priority: 24.10.2006 BR PI0604336
(43) Date of publication of application: 19.08.2009
(73) Proprietor: CIRNE SILVA, André Luiz, 20520-053 Rio de Janeiro - RJ (BR)
(72) Inventor: CIRNE SILVA, André Luiz, 20520-053 Rio de Janeiro (BR); JUNQUEIRA BOURDOT DUTRA, Achilles, 22210-080 Rio de Janeiro (BR)
(74) Representative: Cabinet Plasseraud
(86) International application number: PCT/BR2007/000284
(87) International publication number: WO 2008/049179

(56) References cited:
- WO-A1-2005/061394
- JP-A- 06 178 982
- JP-A- 2000 015 260
- US-A- 3 975 247
- US-A- 4 292 175
- US-A1- 2002 170 816
- US-A1- 2004 154 918
- OEMCKE D: "THE TREATMENT OF SHIPS' BALLAST WATER" INTERNET CITATION March 1999 (1999-03), XP002210574 Retrieved from the Internet: URL:http://www.pcq.com.au/pdf/pauline2.pdf > [retrieved on 2002-08-22]

## Description

The transport of exotic species and bacteria by ship's ballast water is a worldwide environmental problem which causes high costs damage in several countries in all continents. In 2002, the ANVISA- Brazilian Agency for Sanitary Survey carried out studies about pathogenic organisms in nine Brazilian harbors, identifying the presence of several pathogenic microorganisms, among them, the bacteria *Vibrio cholerae.* This result endorses other studies performed in different harbors around the world.

According to RUIZ *et al.* (2001), the economic impact of these invasions is considerable, being only the Zebra Mussel (*Dreissena polymorpha -* Pallas, 1771) associated with damages above 500 million dollars per year in the United States.

From the establishment of the electrolytic dissociation theory, in 1884, by Svante August Arrhenius, several electrolytic cells for effluent treatment were patented. According to MARSON (1965), in 1887, Eugene Hermite patented in England and France, a process for the treatment of sewage associated with salt water. Although such systems already disinfected partially the treated water, it was just from the beginning of the 20^{th} century that specific patents about water disinfection by electrochemical process came out through the European patents of Eugene Hermite (GB 189318370 (Dec., 1893), GB 189322279 (Jan., 1894), GB 189406497 (Mar., 1895), GB 189510229 (Jul., 1895), GB 189510930 (Jul., 1895) and GB 189603197 (Dec., 1896)) and the patents of Georg Ornstein (GB 191403666 (Jul., 1915) / US 3666 (Jul., 1915)) and Clarence Landreth (GB 191418564 (Aug., 1915) / US 18564 (Aug., 1915)). Although these patents mentioned effluent treatment, they referred to the disinfection of sewage waters.

Then, as can be seen, the application of the electrochemical process for disinfection is already known since a long time ago, as evidenced, both, by the patents mentioned previously and by the following ones:
GB 190301325 (Feb., 1903), GB 150718 (Jun., 1921) / FR 536941 (Nov., 1920), GB 150718 (Jun., 1921), GB 267058 (Mar., 1927), GB 311218 (May., 1929), GB 311253 (May., 1929), GB 430635 (Jun., 1935), GB 467544 (Jun., 1937), GB 745048 (Feb., 1956), US 3076754 (Feb., 1963), US 3873438 (Mar., 1975), US 3925176 (Dec., 1975), US 3943044 (Mar., 1976), US 4013557 (Mar., 1977), US 4032426 (Jun., 1977),US 4048044 (Sep., 1977), US 4048032 (Sep., 1977) / GB1507324 (Apr., 1978), GB 1497134 (Jan., 1978), US 4098660 (Jul., 1978), US 4107024 (Aug., 1978) / JP 52139678 (Nov., 1977), US 4119517 (Oct., 1978), US 4121991 (Oct., 1978), US 4160716 (Jul., 1979), WO 7900145 (Mar., 1979) / US 4268367 (May., 1981) / JP 54099341 (Sep., 1977), US 4169035 (Sep., 1979), US 4171256 (Oct., 1979), US 4172773 (Oct., 1979), US 4193858 (Mar., 1980), US 4202740 (May., 1980), US 4229272 (Oct., 1980), US 4250126 (Feb., 1981), US 4248690, US 4294697 (Oct., 1981), JP 57016179 (Jan., 1982), JP 57043990 (Mar., 1982), PT 77348 (Oct., 1983) / BR 8306350-1 (Nov., 83) / US 4451341 (May., 1984), US 4422919 (Dec., 1983), US 4422917 (Dec., 1983), US 4451341 (May., 1984) / EP 0114364 (Aug., 1984), JP 59100273 (Jun., 1984), US 4488945, US 4496452 (Jan., 1985), US4500404 (Feb., 1985), US 4519889 (May., 1985), JP 60097088 (May., 1985), JP 60125387 (Jul., 1985), US 4510026 (Sep., 1985), KR 8600601B (May., 1986), US 4693806 (Sep., 1987), JP 62273096 (Nov., 987), US 4710233 (Dec., 1987), JP 63162891 (Jul., 1988), US 4761208 (Aug., 1998), US 4783246 (Nov., 1988), JP 1180293 (Jul., 1989), JP 1299694 (Dec., 1989), JP 2111708 (Apr., 1990), JP 3020491 (Jan., 1991), US 4992156 (Feb., 1991), JP 3072991 (Mar., 1991), BR 7101496 (Jul., 1991), US 5037519 (Aug., 1991), US 5051161 (Sep., 1991), JP 3293089 (Dec., 1991), JP 4018982 (Jan., 1992), JP 5161487 (Jun., 1993), JP 5212381 (Aug., 1993), BR 9303744 (Sep., 1993) / AU658328 (Sep., 1993) / EP 0615003 (Sep., 1993), US 5256268 (Oct., 1993), JP 5261373 (Oct., 1993), JP 5317861 (Dec., 1993), US 5298280 (Mar., 1994), JP 6086980 (Mar., 1994), JP 6086981 (Mar., 1994), JP 6071261 (Mar., 1994), JP 6086983 (Mar., 1994), JP 6086977 (Mar., 1994), US 5304289 (Apr., 1994), JP 6091268 (Apr., 1994), JP 6099175 (Apr., 1994), US 5314591 (May., 1994), US 5316740 (May., 1994), JP 6154755 (Jun., 1994), JP 6165989 (Jun., 1994), JP 6182344 (Jul., 1994), JP 6237747 (Aug., 1994), JP 6238281 (Aug., 1994), JP 6246267 (Sep., 1994), JP 6246269 (Sep., 1994), JP 6246273 (Sep., 1994), JP 6269779 (Sep., 1994), US 5364509 (Nov., 1994), US 5360526 (Nov., 1994), JB 6343966 (Dec., 1994), US 5385711 (Jan., 1995), JP 7024468 (Jan 1995), JP 7047369 (Feb., 1995), JP 7060256 (Mar., 1995), JP 9088474 (Apr., 1995), JP 7060 290 (May., 1995), JP 7116664 (May., 1995), US 5427667 (Jun., 1995), JP 7163981 (Jun., 1995), JP 7171204 (Jul., 1995), JP 7171565 (Jul., 1995), US 429723 (Jul., 1995), JP 7284775 (Oct., 1995), JP 7299126 (Nov., 1995), JP 7299459 (Nov., 1995), JP 7308676 (Nov., 1995), US 5474662 (Dec., 1995), JP 7328640 (Dec., 1995), JP 7328100 (Dec., 1995), JP 8001164 (Jan., 1996), JP 8024867 (Jan., 1996), JP 8023821 (Jan., 1996), JP 8052475 (Feb., 1996), JP 8057484 (Mar., 1996), JP 8117757 (May., 1996), JP 7163982 (May., 1996), JP 7163983 (Jun., 1996), US 5534120 (Jul., 1996), JP 8308909 (Nov., 1996), JP 8308910 (Nov., 1996), JP 8318279 (Dec., 1996), JP 9001150 (Jan., 1997), JP 9010772 (Jan., 1997), JP 9029246 (Feb., 1997), JP 9047763 (Feb., 1997), US 5611907 (Mar., 1997), JP 9085250 (Mar., 1997), JP 9085253 (Mar., 1997), BR 7700672U (Apr., 1997), PI 9710166-4 (Apr., 1997) / US 9706288 (Apr., 1997) / WO 9741071 (Nov., 1997) / US 5705050 (Jan., 1998), US 5616221 (Apr., 1997), US 5616234 (Apr., 1997), JP 9117768 (May., 1997), JP 9122651 (May., 1997), JP 9157173 (Jun., 1997), JP 9155356 (Jun., 1997), JP 9174056 (Jul., 1997), JP 9187770 (Jul., 1997) / US 5858202 (Jan., 1999), JP 9239006 (Sep., 1997), JP 9262585 (Dec., 1997), JP 9262583 (Dec., 1997), US 5688385 (Nov., 1997), JP 9294987 (Nov., 1997), JP 9327670 (Dec., 1997), JP 10005766 (Jan., 1998), US 5720869 (Feb., 1998), JP 10043765 (Feb., 1998), US 5744028 (Apr., 1998), JP 10099413 (Apr., 1998), JP 10109093 (Apr., 1998), US 5753098 (May., 1998), JP 10119935 (May., 1998), JP 10128331 (May., 1998), JP 10137762 (May., 1998), JP 10128336 (May., 1998), US 5770033 (Jun., 1998), US 5770037 (Jun., 1998), US 5771336 (Jun., 1998), JP 10174973 (Jun.; 1998), US 4755268 (Jul., 1998), JP 10183395 (Jul., 1998), WO 0725279 (Jul., 1997), JP 10216726 (Aug., 1998), JP 10258280 (Sep., 1998), JP 10237681 (Sep., 1998), JP 10277553 (Oct., 1998), US 4711810 (Nov., 1998), JP 10309582 (Nov., 998), US 5843291 (Dec., 1998), JP 10314748 (Dec., 1998), JP 10314748 (Dec., 1998), JP 11057718 (Mar., 1999), JP 11076383 (Mar., 1999), US 5891097 (Apr., 1999), JP 11114572 (Apr., 1999), US 5928491 (Jul., 1999), JP 11197669 (Jul., 1999), US 5935393 (Aug., 1999), US JP 11207348 (Aug., 1999), US 5948273 (Sep., 1999), US 5954939 (Sep., 1999), JP 11253958 (Sep., 1999), US 5965009 (Dec., 1999), US 5989396 (Nov., 1999); US 5989407 (Nov., 1999), JP 11300361 (Nov., 1999), JP 11319831 (Nov., 1999), JP WO 9955389 (Nov., 1999) / US 6126810 (Oct., 2000), US 6007686 (Dec., 1999), JP 2000005752 (Jan., 2000), JP 2000015258 (Jan., 2000), 2000037690 (Feb., 2000), JP 2000093969 (Apr., 2000), JP 2000140876 (May., 2000), JP 2000126780 (May., 2000), JP 2000126775 (May., 2000), JP 2000135488 (May., 2000), JP 2000185286 (Jul., 2000), JP 2000202451 (Jul., 2000), JP 2000210666 (Aug., 2000), US 6126796 (Oct., 2000), US 6126810 (Oct., 2000), US 6149780 (Nov., 2000), JP 2001000974 (Jan., 2001), US 6174419 (Jan., 2001), PI 0108037-7 (Jan., 2001) / WO 0155035 (Aug., 2001) / US 2003127398 (Jul., 2003) / US 6860990 (Jul., 2003), JP 2001029955 (Feb., 2001), JP 2001048199 (Feb., 2001), US 6200435 (Mar., 2001), JP 2001070945 (Mar., 2001), US 6217741 (Apr., 2001), JP 2001170636 (Jun., 2001), JP 2001170640 (Jun., 2001), US 6258225 (Jul., 2001), US 6267885 (Jul., 2001), US 6277266 (Aug., 2001), US 6280594 (Aug., 2001), JP 2001212480 (Aug., 2001), JP 2001219168 (Aug., 2001), JP 2001225074 (Aug., 2001), US 6294073 (Sep., 2001), US 6309523 (Oct., 2001), US 6315886 (Nov., 2001), US 6328875 (Dec., 2001), JP 20011341979 (Dec., 2001) / US 2002005361 (Jan., 2002) / US 6527922 (Mar., 2003), US 6551492 (Mar., 2002), US 2002036134 (Mar., 2002) / US 6464845 (Oct., 2002), US 6375809 (Apr., 2002), US 6379525 (Apr., 2002), JP 2002126766 (May., 2002), JP 2002119970 (Apr., 2002), JP 2002153874 (May., 2002), JP 2002153873 (May., 2002), JP 2002153879 (May., 2002), JP 2002126740 (May., 2002) / US 6699381 (Mar., 2004), US 6402932 (Jun., 2002), JP 2002159970 (Jun., 2002), CN 1354282 (Jun., 2002), US 6416645 (Jul., 2002), US 6428697 (Aug., 2002), JP 2002239551 (Aug., 2002), JP 2002239552 (Aug., 2002), JP 2002282860 (Oct., 2002), JP 2002320972 (Nov., 2002), WO 0290266 (Nov., 2002) / US 7008529 (Mar., 2006), US 6511586 (Jan., 2003), JP 2003024943 (Jan., 2003), JP 2003024940 (Jan., 2003), US 6524475 (Feb., 2003), US 6527940 (Mar., 2003), JP 2003061610 (Mar., 2003), JP 2003080249 (Mar., 2003), JP 2003088865 (Mar., 2003), JP 2003088867 (Mar., 2003), US 6558537 (May., 2003), JP 2003153989 (May., 2003), AU 2003286274 (Jul., 2003) / WO 2004054932 (Jul., 2004), US 6621464 (Sep., 2003), US 6623695 (Sep., 2003), US 6627053 (Sep., 2003), US 6627073 (Sep., 2003), JP 2003251351 (Sep., 2003) / US 6905580 (Jun., 2005), JP 2003236550 (Aug., 2003), JP 2003266073 (Sep., 2003), US 6632336 (Oct., 2003), JP 2003311271 (Nov., 2003), US 6716325 (Apr., 2004), US 6716335 (Apr., 2004), JP 2004105423 (Apr., 2004), JP 2004124117 (Apr., 2004), US 6736966 (May., 2004), AU 2004241863 (May., 2004) / WO 2004103168 (Dec., 2004), US 6740245 (May., 2004), US 6773575 (Aug., 2004), US 6805787 (Dec., 2004), JP 2004290937 (Dec., 2004), US 6814858 (Nov., 2004), US 6837986 (Jan., 2005), US 6846394 (Jan.., 2005), JP 2005013714 (Jan., 2005), AU 2005212085 (Feb., 2005) / WO 2005077833, US 6855233 (Feb., 2005), US 6923901 (Feb., 2005), JP 2005058961 (Mar., 2005), US 6884344 (Apr., 2005), JP 2005111609 (Apr., 2005), AU 2004283532 (May., 2005) / WO 2005039653 (May., 2005), US 6905580 (Jun., 2005), US 2005121334 (Jun., 2005), US 6916427 (Jul., 2005), JP 2005224691 (Aug., 2005), US 6966995 (Nov., 2005), JP 2005350716 (Dec., 2005), WO 2006003723 (Jan., 2006), US 7001493 (Feb., 2006), US 7008529 (Mar., 2006), JP 2006088156 (Apr., 2006), WO 2006057311 (Jun., 2006), WO 2006058261 (Jun., 2006) / US 2006613257 (Jun., 2006), WO 2006058282 (Jun., 2006) / US 2006137973 (Jun., 2006), US 7090753 (Aug., 2006).

The application of the electrochemical process for water disinfection is based on the flow of an electrical current through the electrodes immersed in a solution containing an electrolyte. The current flow produces redox reactions, which can generate powerful oxidant agents that are able to promote disinfection. However, many equipments and processes use these oxidant solutions in tanks, along with the solution to be disinfected.

The US Patent, US 4172773 (Oct., 1979), proposes an electrochemical cell without diaphragm for the production of oxidant agents, especially the hypochlorite. The referred cell uses a porous titanium anode. The porous diameter ranged from 5 to 100µm. This cell is operated with a current density ranging from 200 to 500 mA/cm².

The US Patent, US 4761208 (Aug., 1998), describes an electrolytic cell, fed with natural or synthetic saline solution, for the generation of germicide substances. The aforementioned cell has two chambers, one for the cathode and the other for the anode, separated by a Teflon, or similar non-permeable barrier, although semi-permeable barrier can also be used. Then, the flow of substances generated in the anodic and cathodic chambers can be used independently or in conjunct.

The European Patent, WO 2006058261 (Jun., 2006) describes a system for ballast water treatment composed of a tubular electrolytic cell without electrodes separation membranes along with a hydro cyclone for the separation of the hydrogen generated on the cathode and a tank of sulfite employed in the dechlorination step. The aforementioned system produces sodium hypochlorite from the chloride ion of the seawater, or, in the case of sweet ballast water, from the sodium chloride added to the water before the electrolysis. The hypochlorite generated on the anode acts as germicide and oxidant agent for the organic load in the sea water. US Patents US 4292175 and US 3975247 disclose further systems for treating ballast water or wastewater generated on marine vessels.

The electrolytic cells used for sterilization can be divided in two general groups: cells with and cells without membranes or diaphragm. Further more they differ from each other by the electrodes type, which can be made of different materials, with different geometries, being the most common the dimensionally stable electrodes in the form of plates or grids.

The electrolytic cells with membranes or diaphragms present, in general, a more elevated operational cost due to its inherent higher energy consumption and from the problems caused by the separator, which can act as a substrate for the microorganism growing.

The present invention permits the sterilization of ballast water with elevated bacteria load (10⁸ CFU/100mL) and is based on the utilization of an electrolytic reactor for the sterilization and disinfection of seawater and ballast water of ships, oil platforms and vessels, in general, by the flow of the aforementioned waters through the electrolytic reactor, which can be installed in ships, in harbors and maritime terminals, and operated both, continuously or in batch mode.

The ballast water to be sterilized is continuously pumped, passing through a filtration system, with backwashing, to the entrance of the electrolytic reactor of continuous upward flow or batch reactor, without stirring devices, without the addition of chemicals, using only electric current and the seawater as electrolyte.

As the seawater comes into the aforementioned reactor, it circulates between the cathodes, constituted of titanium plates (preferentially), grids or screens and anodes constituted of titanium layered with metallic oxides plates (preferentially), grids or screens, which are not separated by any physical barrier except for the solution to be treated, without any type of semi-permeable membranes.

As the seawater circulates between cathodes and anodes electrochemical reactions on the electrodes produce powerful oxidant agents, such as: Cl₂, ClO⁻, HClO, O₃ and H₂O₂, which disinfect and destroy organic pollutants, eventually present in this water. Furthermore, during the electrolysis short-lived free radicals, such as O' (oxygen radical), 'OH (hydroxyl radical) and O₂⁻* (superoxide radical) are generated, which present elevated disinfection/sterilization power (DIAO *et al.,* 2004).

The chemical species produced by the electrochemical reactions inactivate the microorganisms, disinfecting or sterilizing the ballast water. The microorganisms are subjected to the action of the oxidation agents aforementioned and are also eliminated by the direct contact with the electrodes surface, due to the high electrical field in the neighborhood of the electrical double layer, at the interface electrode/electrolyte, which is compressed by the electrical flow and presents an electrical field higher than 10¹⁰ V/m. This system can be controlled by the application of an electrical current to promote just the disinfection or to reach the sterilization level, permitting to adjust its utilization to achieve the standards established by the environmental laws.

The present invention makes possible the sterilization/disinfection of ballast water with elevated bacteria concentration (around 10⁸ CFU/100mL), furthermore, it increases the amount of dissolved oxygen in water and can be carried out both in ships or in harbors and docks.

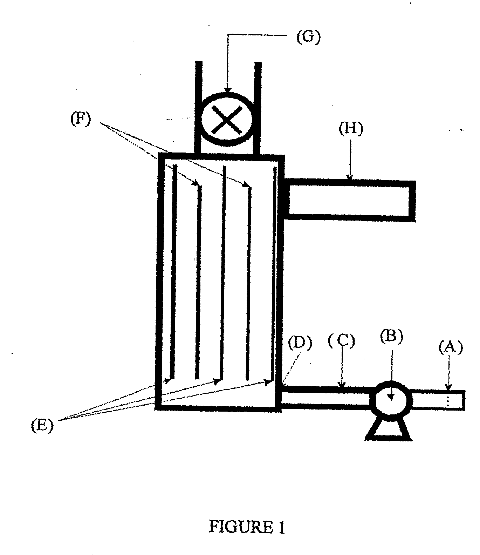

The object of the present invention is a system which permits the circulation of ballast water through one or more electrolytic cells in series, fed by a source of direct current or reverse pulse current. A scheme of the cell is presented in Figure 1, where (A) is the filtration and backwashing system, (B) is the pump to feed the cell, (C) is the tubing for the cell feeding, (D) is the ballast water entrance, (E) are the anodes, (F) are the cathodes, (G) is the gas purge system and (H) is the exit for the treated ballast water.

The cathodes are constituted of titanium plates (preferentially), grids or screens and the anodes are constituted of plates (preferentially), grids or screens of titanium layered with metallic oxides, as ruthenium, tantalum or iridium, being placed parallel to the cathodes in alternate positions. The gap between cathodes and anodes should be in the range of 0.25 to 1.0 cm.

The present cell differs from the others because it presents a cathode area corresponding to 70% of the anode area, to improve the rate of the hypochlorite generation. Furthermore, it presents a rectangular cross section associated with an upwards ballast water flow and a gas purge system on the top of the cell. The absence of diaphragms or membranes turns the contact of the ballast water to be disinfected with the electrodes more effective and makes the removal of the gases generated by the electrochemical reactions easier.

The present invention can be illustrated by the following examples:

### Example 1

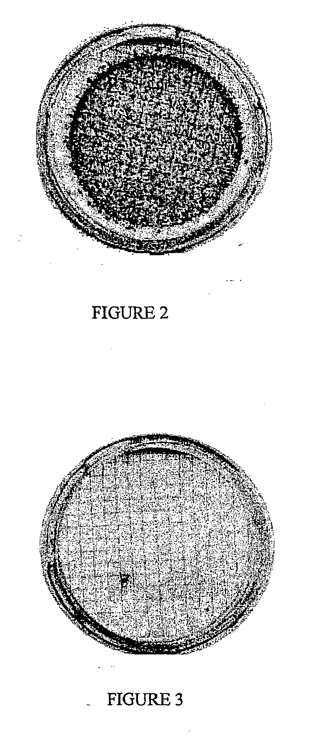

A polluted ballast water sample with elevated bacteria concentration (10⁶ to 10⁸ CFU/100mL) was disinfected by electrolysis with a current intensity of 5.0 A and a voltage of 3.2 V (cathode-anode) after a residence time of 20 minutes. The aspect of the Milipore membranes used for the colony formation unit counting before and after the treatment is presented in Figures 2 and 3 respectively.

### Example 2

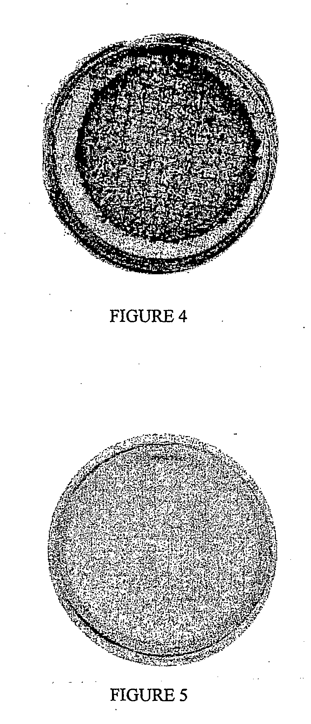

A polluted ballast water sample with elevated bacteria concentration (10⁶ to 10⁸ CFU/100mL) was sterilized by electrolysis with a current intensity of 6.5 A and a voltage of 3.9 V (cathode-anode) after a residence time of 6 minutes. The dissolved oxygen concentration of the sample increased from 1.8 mg/L to 5.4 mg/L,- at room temperature. The specific energy consumption relative to hypochlorite production was 7.9 kWh/kg. The aspect of the Milipore membranes used for the colony formation unit counting before and after the treatment is presented in Figures 4 and 5 respectively.

The present sterilization/disinfection system of ballast water can also be used for potable water by adjusting its electrical conductivity through additions of sodium chloride.

### REFERENCES

BARD, A. J., PARSONS R., AND JORDAN J., Standard Potentials in Aqueous Solutions, Marcell Dekker, NY, 1985.
BAX, N., WILLIAMSON, A., AGUERO, M., et al., Marine invasive alien species: a threat to global biodiversity, Marine Policy 27,313-323, 2003
DIAO, H. F., LI, X. Y., GU, J.D., et al., Electron Microscopic Investigation of the Bactericidal Action of Electrochemical Disinfection in Comparison with Chlorination, Ozonation and Fenton Reaction. Process Biochemistry 39,1421 - 1426, 2004.
DORÉ, M., Chemistry of Oxidants and Water Treatment. Lavoisier 22, n° 5,32 - 37, 1989.
FENG, Chuanping, Water Disinfection by Electrochemical Treatment. Bioresource Technology 94,21 - 25, 2004.
HINE, F., Electrode Process and Electrochemical Engineering, Plenum Press, New York1985.
KRAFT, A., M. BLASCHKE, D. KREYESIG, et al., Electrochemical Water Disinfection Part I: Hypochlorite production from very dilute chloride solution. Journal of Applied Electrochemistry 29; 861-868, 1999a.
KRAFT, A., M. BLASCHKE, D. KREYESIG, et al., Electrochemical Water Disinfection Part II: Hypochlorite production from potable water, chlorine consumption and the problem of calcareous deposits. Journal of Applied Electrochemistry 29; 895-902, 1999b.
KRAFT, A., M. BLASCHKE, D. KREYESIG, et al., Electrochemical Water Disinfection Part III: Hypochlorite production from potable water with ultrasound assisted cathode cleaning. Journal of Applied Electrochemistry; 32, 597 - 601, 2002.
POURBAIX, M.. Atlas of Chemical Equilibria in Aqueous Solutions, Cebelcor, Brussels, 1996.
MARSON H.W., Electrolytic sewage treatment; the modern process, Water Pollution Control, 109-119,1965
RUIZ, G. M., MILLER, A. W., LION, K., Status and Trends of Ballast Waster Management in the United States. First Biennial Report of the National Ballast Information Clearinghouse, 2001.

## Claims

1. A process for the treatment of ships ballast water, oil platforms and ships in general, comprising the step of treating ballast water using an electrochemical reactor;
- said electrochemical reactor comprising one or more electrolytic cells;
- said electrolytic cells comprising electrodes consisting of anodes and cathodes in alternate positions;
- said electrochemical reactor comprising a rectangular cross section associated with an upwards ballast water flow and a gas purge system on the top of the cell;
**characterized in that** the cathode area of the electrochemical cell is 70% of the anode area.

2. The process of claim 1, **characterized by** the fact that the current is applied during around 20 minutes, with an intensity of 5,0 A and a voltage of 3,2 V.

3. The process of claim 1, **characterized by** the fact that the current is applied during around 6 minutes, with an intensity of 6,5 A and a voltage of 3,9 V.

## Patentansprüche

1. Verfahren zur Behandlung von Schiffsballastwasser, Erdölplattformen und Schiffen im Allgemeinen, umfassend den Schritt des Behandelns von Ballastwasser unter Verwendung eines elektrochemischen Reaktors, wobei
• der elektrochemische Reaktor eine oder mehrere elektrolytische Zellen umfasst,
• die elektrolytischen Zellen Elektroden umfassen, die aus Anoden und Kathoden in alternierenden Positionen bestehen,
• der elektrochemische Reaktor einen rechteckigen Querschnitt in Verbindung mit einem nach oben verlaufenden Ballastwasserstrom und einem Gasspülsystem oben auf der Zelle umfasst,
**dadurch gekennzeichnet, dass** die Kathodenfläche der elektrochemischen Zelle 70% der Anodenfläche beträgt.

2. Verfahren nach Anspruch 1, **gekennzeichnet durch** die Tatsache, dass der Strom über einen Zeitraum von ca. 20 Minuten mit einer Stärke von 5,0 A und einer Spannung von 3,2 V angelegt wird.

3. Verfahren nach Anspruch 1, **gekennzeichnet durch** die Tatsache, dass der Strom über einen Zeitraum von ca. 6 Minuten mit einer Stärke von 6,5 A und einer Spannung von 3,9 V angelegt wird.

## Revendications

1. Procédé de traitement d'eau de ballast de navires, de plates-formes pétrolières et de navires en général, comprenant l'étape de traitement d'eau de ballast en utilisant un réacteur électrochimique ;
- ledit réacteur électrochimique comprenant une ou plusieurs cellules électrolytiques ;
- lesdites cellules électrolytiques comprenant des électrodes consistant en des anodes et des cathodes en des positions alternées ;
- ledit réacteur électrochimique comprenant une section rectangulaire associée à un écoulement vers le haut d'eau de ballast et un système de purge de gaz en haut de la cellule ;
**caractérisé en ce que** l'aire de la cathode de la cellule électrochimique représente 70 % de l'aire de l'anode.

2. Procédé selon la revendication 1, **caractérisé par le fait que** le courant est appliqué pendant environ 20 minutes, avec une intensité de 5,0 A et une tension de 3,2 V.

3. Procédé selon la revendication 1, **caractérisé par le fait que** le courant est appliqué pendant environ 6 minutes, avec une intensité de 6,5 A et une tension de 3,9 V.
